# DEMANDE DE BREVET EUROPEEN

(11) **EP 1 022 080 A1**
(43) Date de publication de la demande: **26.07.2000**
(21) Numéro de dépôt: 00400173.1
(22) Date de dépôt: 24.01.2000
(51) Int. Cl.: B23B 31/18, B23B 31/16

(54) **Mandrin à serrage**

(30) Priorité: 25.01.1999 FR 9900755
(71) Demandeur: SANDVIK TOBLER S.A., F-95380 Louvres (FR)
(72) Inventeur: Barbieux, Jacques, 95380 Louvres (FR)
(74) Mandataire: Lhuillier, René

(57) **Abrégé**

L'invention propose un mandrin comprenant un certain nombre de mors (8), dont chacun est fixé à l'extrémité antérieure d'un bras porte-mors (5), ledit bras (5) étant porté par une rotule (6) montée sur le corps (1) du mandrin et dont la rotation imprime au mors (8) un mouvement essentiellement radial, ladite rotation étant actionnée en déplaçant radialement un coulisseau (4) poussant une bille tronquée (10) logée entre ledit coulisseau (4) et un évidement aménagé dans le bras (5) en arrière de ladite rotule (6). En outre, ladite bille tronquée (10) est capable de glisser sur la surface plane de contact avec le coulisseau (4), ledit bras porte-mors (5) coulissant alors dans la rotule (6) selon une direction essentiellement axiale, tout en étant tiré vers l'arrière par un ressort de rappel (7).

Application au serrage d'une pièce en la maintenant axialement sur ses appuis.

## Description

La présente invention concerne un dispositif de serrage d'une pièce à usiner sur un mandrin, dispositif permettant, pendant le serrage, de maintenir la pièce axialement en appui sur des butées servant au prépositionnement de la pièce et disposées sur le mandrin.

Parmi les mandrins connus, certains sont équipés de mors pouvant se déplacer, par rapport à l'axe du mandrin, radialement, mais pas axialement. On connaît également des dispositifs permettant un déplacement radial et axial combiné de la part de chaque mors, de façon à pouvoir simultanément serrer une pièce et la plaquer sur le mandrin. Mais les mandrins classiques ne permettent pas de découpler le déplacement radial du mors de son déplacement axial.

Pour effectuer un serrage optimal, c'est-à-dire un serrage dont les organes sont capables de maintenir fermement une pièce en cours d'usinage sans risquer pour autant d'endommager la surface de cette pièce, on prévoit habituellement (dans la mesure où le profil de la pièce le permet) de faire coopérer les mors avec certaines parties adéquates de la pièce, telles que gorges, évidements, épaulements ou saillies.

Or les cotes des pièces brutes présentent inévitablement une certaine dispersion par rapport au profil théorique. Afin de positionner les mors sur la pièce de manière à pouvoir effectuer un serrage optimal, on est alors amené à régler sa position dans l'espace, et donc par rapport au mandrin. D'une manière générale, ce réglage ne se limite pas à une simple translation radiale. De ce fait, on ne peut pas prépositionner une pièce sur un mandrin classique (en l'appuyant sur des butées de référence disposées sur la face du mandrin à cet effet), et ensuite, sans la déplacer axialement, épouser étroitement le profil de la pièce au serrage.

Cela est fâcheux car il existe un véritable besoin industriel pour un mandrin offrant cette possibilité. C'est par exemple le cas quand on souhaite serrer une pièce brute sur un mandrin dans une position bien particulière qui permettra d'usiner la pièce en laissant un minimum de balourds.

La présente invention résout ce problème en permettant aux mors de se mouvoir radialement, axialement, et même transversalement, avec un certain degré d'indépendance mutuelle.

Le mandrin selon l'invention comprend un certain nombre de mors, dont chacun est fixé à l'extrémité antérieure d'un bras porte-mors, ledit bras étant porté par une rotule montée sur le corps du mandrin et dont la rotation imprime au mors un mouvement essentiellement radial, ladite rotation étant actionnée en déplaçant radialement un coulisseau poussant une bille tronquée logée entre ledit coulisseau et un évidement aménagé dans le bras en arrière de ladite rotule. En outre, ladite bille tronquée est capable de glisser sur la surface plane de contact avec le coulisseau, ledit bras porte-mors coulissant alors dans la rotule selon une direction essentiellement axiale, tout en étant tiré vers l'arrière par un ressort de rappel.

Selon des caractéristiques supplémentaires, la partie postérieure du bras porte-mors se déplace à l'intérieur d'un évidement aménagé dans le plateau sur lequel est monté le mandrin et dont la largeur est légèrement supérieure à celle dudit bras, de manière à conférer au bras une certaine latitude de mouvement dans la direction transversale.

Ainsi, les mors peuvent chacun venir au contact de la pièce à usiner et s'adapter à son profil exact en ne lui faisant subir qu'une translation radiale, avant de procéder à son serrage définitif.

D'autres avantages, buts et caractéristiques de la présente invention ressortiront de la description ci-dessous de plusieurs modes de réalisation de l'invention présentés à titre d'exemples, ladite description s'appuyant sur les figures annexées, dans lesquelles :
la figure 1 est une coupe longitudinale d'un mandrin conforme à un premier mode de réalisation, montrant un mors en position ouverte et une pièce à usiner présentant une gorge à symétrie axiale,
la figure 2 est analogue à la figure 1, mais illustre la phase où ledit mors vient au contact de la pièce à usiner,
la figure 3 est analogue aux figures précédentes, mais montre le mors dans sa position définitive prévue sur ladite pièce,
la figure 4 est une coupe longitudinale de la partie arrière d'un mandrin conforme à un deuxième mode de réalisation,
la figure 5 est une coupe longitudinale de la partie arrière d'un mandrin conforme à un troisième mode de réalisation,
la figure 6 est une vue de dos d'un bras porte-mors à adaptation transversale, qui peut faire partie d'un mandrin quelconque selon l'invention, et
la figure 7 est une coupe longitudinale montrant un mors dans sa position définitive sur une pièce à usiner présentant un épaulement à symétrie axiale.

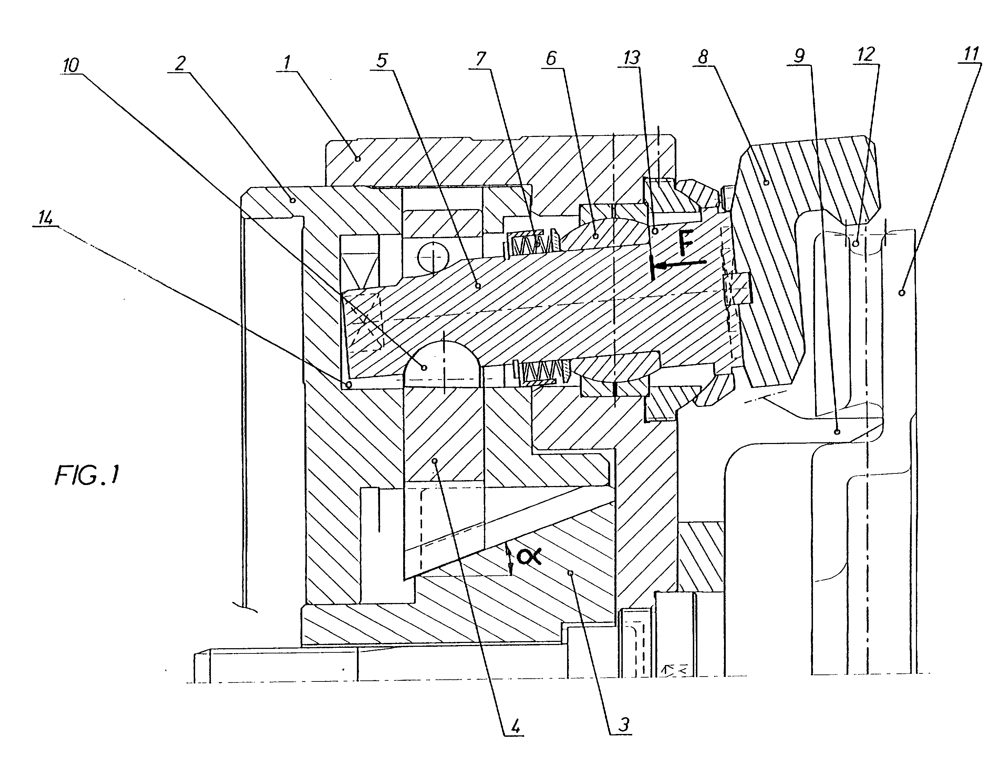

On peut voir sur les figures 1 à 3 un corps de mandrin 1 monté sur un plateau 2. Le corps 1 présente sur sa face antérieure des butées de référence sur lesquelles s'appuie la pièce à usiner 11. Dans l'exemple illustré, la butée 9 a la forme d'une saillie essentiellement axiale, qui pénètre dans un évidement correspondant aménagé dans la pièce 11. On voit également l'un des mors 8, qui est fixé à l'extrémité antérieure d'un bras porte-mors respectif 5. Ce dernier est porté par une rotule 6 montée dans le corps 1 et dont la rotation imprime au mors 8 un mouvement essentiellement radial. En outre, le bras 5 peut coulisser dans la rotule 6 selon une direction essentiellement axiale, tout en étant tiré vers l'arrière par un ressort de rappel 7.

Sur la figure 1, le dispositif de serrage est en position ouverte.

Tant que le mors n'est pas venu prendre appui sur la pièce 11, un épaulement 13 du bras 5 vient buter contre la face antérieure F de la rotule 6.

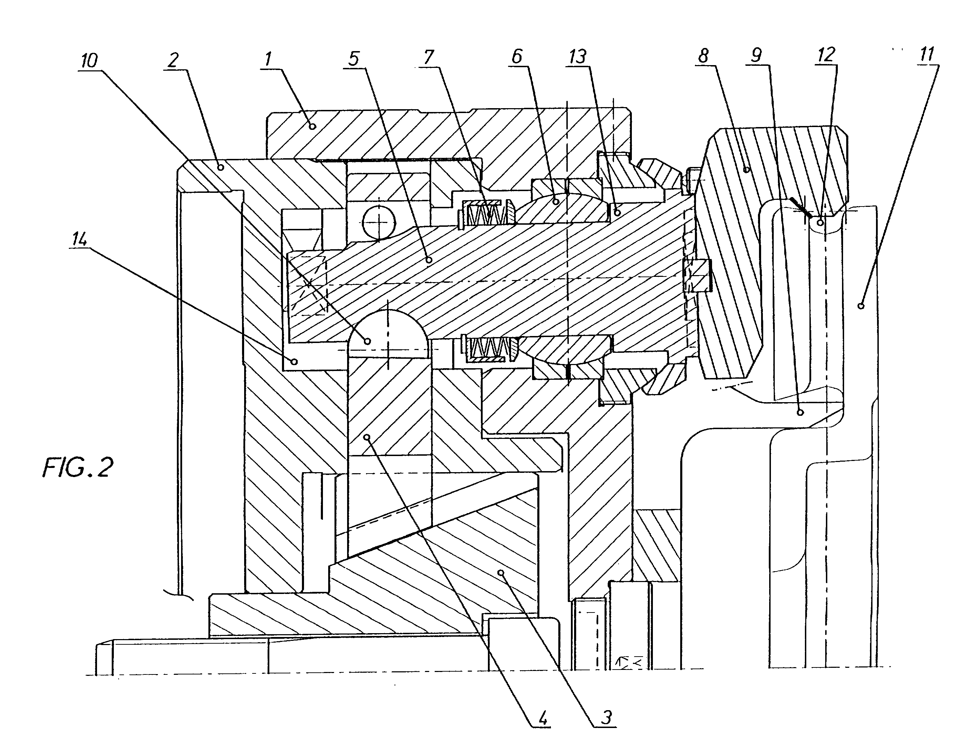

Pour amener les mors au contact de la pièce 11 (figure 2), on fait coulisser axialement vers l'arrière la tirette 3, qui peut être actionnée par un vérin hydraulique ou pneumatique. La face de contact entre la tirette 3 et le coulisseau 4 fait un certain angle α avec l'axe du mandrin, et par suite le coulisseau est poussé radialement ; ce dernier pousse à son tour la bille tronquée 10 dont la surface sphérique se loge dans un évidement du bras 5 situé en arrière de la rotule 6, ce qui fait pivoter le bras 5. L'angle α peut avoir une valeur quelconque, pourvu qu'il soit inférieur à l'angle à partir duquel les frottements entre tirette 3 et coulisseau 4 causeraient un blocage. A ce stade où tous les mors viennent prendre appui sur la surface de la pièce 11, celle-ci subit généralement une translation radiale adéquate.

Dans l'exemple illustré, la pièce 11 présente une gorge 12, contenue dans un plan transversal, dont on va se servir pour effectuer un serrage optimal comme expliqué en introduction. Pour ce faire, on loge l'extrémité des mors dans le fond de la gorge 12.

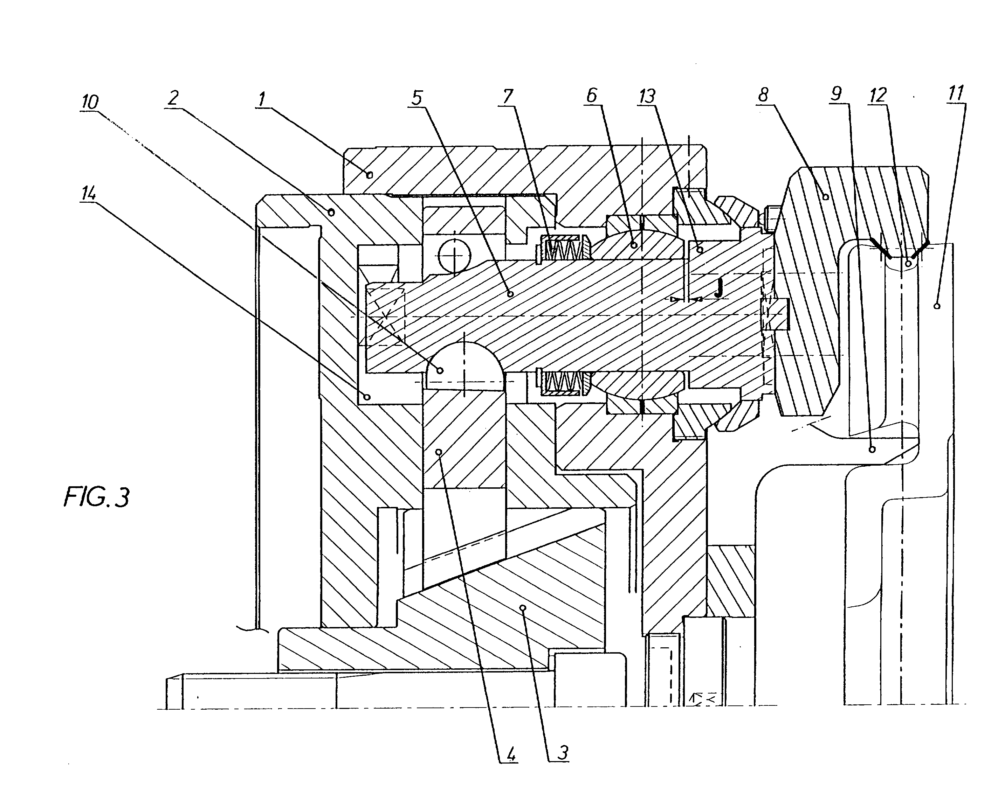

Comme le montre la figure 3, cette opération requiert un déplacement axial du bras 5, qui résulte de la combinaison de l'actionnement final de la tirette 3, de la force de contact entre le mors 8 et la surface de la gorge 12, et enfin de la force de rappel du ressort 7. On obtient ainsi un certain intervalle J entre l'épaulement 13 et la face F de la rotule 6. La valeur de cet intervalle J est d'ailleurs généralement différente d'un bras à l'autre du mandrin, même dans le cas où tous les mors se logent dans la même gorge transversale, car cette gorge 12 n'est pas parfaitement contenue dans le plan transversal théorique en raison des imperfections de formation de la pièce 11. Ce déplacement axial du bras 5 est obtenu selon l'invention par l'entremise d'un déplacement égal de la bille tronquée 10 glissant sur la surface plane de contact avec le coulisseau 4, comme on peut le voir en comparant attentivement les figures 2 et 3.

Cela achève l'opération de serrage selon l'invention qui --il faut le souligner-- s'effectue en maintenant constamment la pièce 11 axialement sur ses appuis.

Une fois terminé l'usinage de la pièce 11, pour desserrer la pièce 11 et ouvrir les bras porte-mors, on fait coulisser la tirette 3 axialement vers l'avant. Celle-ci ramène le coulisseau 4 vers l'axe du mandrin grâce à un dispositif de rappel positif, par exemple une imbrication en forme de queue d'aronde entre la tirette 3 et le coulisseau 4.

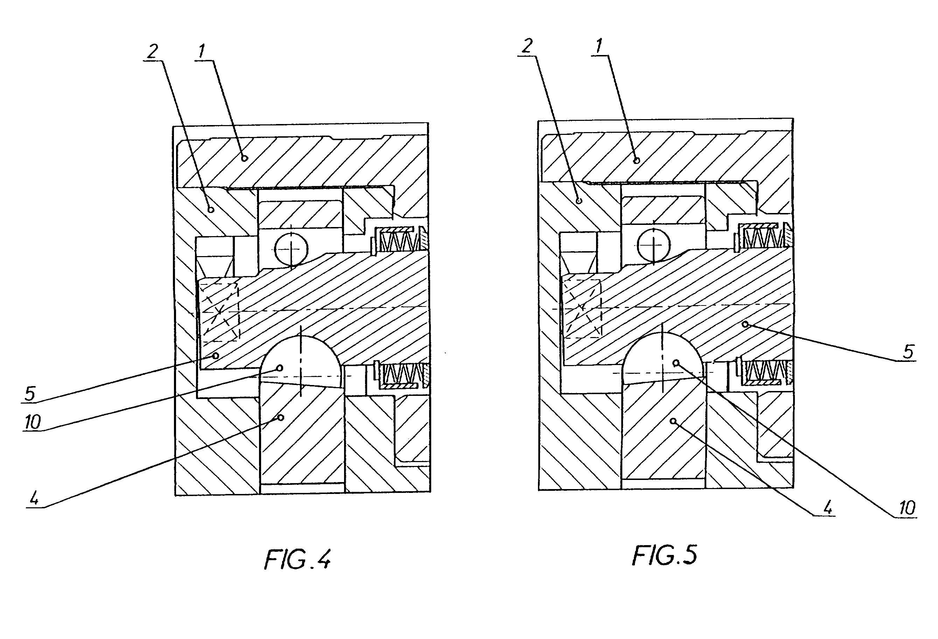

Sur les figures 1 à 3, la face plane de contact entre la bille 10 et le coulisseau 4 est orientée de telle façon que la normale à cette face soit radiale. En variante, on peut utiliser un coulisseau tel que la normale à la face de contact soit légèrement inclinée axialement par rapport à la direction purement radiale, soit vers l'avant (figure 4), soit vers l'arrière (figure 5). L'intérêt de ces variantes est de permettre au mandrin de mieux encaisser les efforts dus à l'usinage lorsque ces derniers possèdent une direction axiale bien déterminée, soit vers l'arrière (figure 4), soit vers l'avant (figure 5).

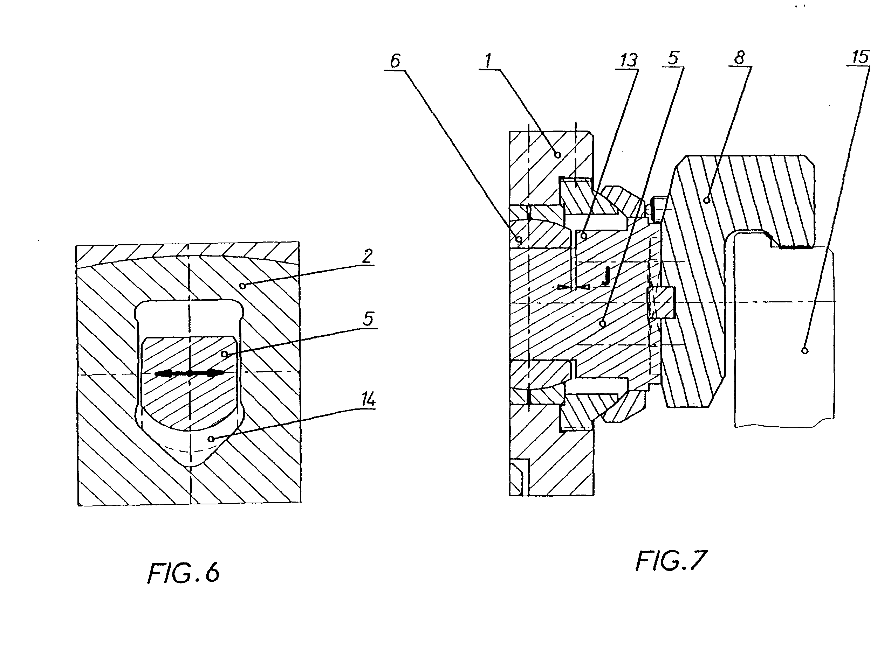

Il sera avantageux d'agencer le mandrin selon l'invention de telle sorte que les mors bénéficient de surcroît d'une certaine latitude de mouvement dans la direction transversale, c'est-à-dire, pour chacun d'eux, dans une direction perpendiculaire au plan des figures 1 à 5. Cela est réalisé en aménageant dans le plateau 2 soutenant le mandrin, pour chaque bras porte-mors 5, un évidement 14 de largeur légèrement supérieure à celle du bras 5, ainsi que le montre la figure 6 (le déplacement transversal de l'arrière du bras 5 y est indiqué par une flèche double).

On se rendra facilement compte qu'une telle caractéristique est fort utile : par exemple, dans le cas de la pièce 11 représentée sur les figures 1 à 3, il faut s'attendre à ce que, du fait, encore une fois, des imperfections de formation des pièces, la gorge 12 ne soit pas parfaitement circulaire. De tels écarts par rapport au profil théorique de la pièce pourront ainsi être absorbés par un léger déplacement transversal des mors (différent d'un mors à l'autre), qui permettra à chacun d'eux de se placer parfaitement à l'endroit prévu de la surface de la pièce.

La figure 6 montre que l'évidement 14 présente une extrémité radiale en forme de "V" du côté proche de l'axe du mandrin. On notera que l'arrière du bras 5 vient se loger à l'intérieur de ce "V" quand le dispositif de serrage est en position ouverte. L'évidement 14 a été agencé de la sorte afin que, dans cette position ouverte, le bras 5 se place automatiquement dans une position médiane transversalement parlant, ce qui est généralement la situation la plus commode pour pouvoir charger la pièce 11 sur le mandrin, ou l'en décharger, sans heurter les mors.

Les modes de réalisation de l'invention décrits ci-dessus ont été présentés en tant qu'exemples illustrant les principes de la présente invention, mais il est bien clair que l'homme de l'art pourra s'en inspirer pour réaliser d'autres variantes sans pour autant sortir de l'invention. De même, l'invention peut s'appliquer à une grande variété de pièces à usiner outre celle décrite ci-dessus, par exemple des pièces présentant un épaulement symétrique par rapport à l'axe du mandrin, comme la pièce 15 représentée sur la figure 7.

## Revendications

1. Mandrin comprenant un certain nombre de mors (8) dont chacun est fixé à l'extrémité antérieure d'un bras porte-mors (5), ledit bras (5) étant porté par une rotule (6) montée sur le corps (1) du mandrin et dont la rotation imprime au mors (8) un mouvement essentiellement radial, ladite rotation étant actionnée en déplaçant radialement un coulisseau (4) poussant une bille tronquée (10) logée entre ledit coulisseau (4) et un évidement aménagé dans le bras (5) en arrière de ladite rotule (6), caractérisé en ce que ladite bille tronquée (10) est capable de glisser sur la surface plane de contact avec le coulisseau (4), ledit bras porte-mors (5) coulissant alors dans la rotule (6) selon une direction essentiellement axiale, tout en étant tiré vers l'arrière par un ressort de rappel (7).

2. Mandrin selon la revendication 1, caractérisé en ce que ladite face plane de contact entre la bille (10) et le coulisseau (4) est orientée de telle façon que la normale à cette face soit radiale.

3. Mandrin selon la revendication 1, caractérisé en ce que ladite face plane de contact entre la bille (10) et le coulisseau (4) est orientée de telle façon que la normale à ladite face soit légèrement inclinée axialement vers l'avant par rapport à la direction purement radiale.

4. Mandrin selon la revendication 1, caractérisé en ce que ladite face plane de contact entre la bille (10) et le coulisseau (4) est orientée de telle façon que la normale à ladite face soit légèrement inclinée axialement vers l'arrière par rapport à la direction purement radiale.

5. Mandrin selon l'une quelconque des revendications 2 à 4, caractérisé en ce que la partie postérieure du bras porte-mors (5) se déplace à l'intérieur d'un évidement (14) aménagé dans le plateau (2) sur lequel est monté le mandrin et dont la largeur est légèrement supérieure à celle dudit bras (5), de manière à conférer au bras (5) une certaine latitude de mouvement dans la direction transversale, si bien que les mors (8) peuvent chacun venir au contact de la pièce à usiner (11) et s'adapter à son profil exact en ne lui faisant subir qu'une translation radiale, avant de procéder à son serrage définitif.

6. Mandrin selon la revendication 5, caractérisé en ce que ledit évidement (14) présente une extrémité radiale en forme de "V" du côté proche de l'axe du mandrin dans laquelle l'arrière du bras (5) vient se loger quand le dispositif de serrage est en position ouverte, de manière à centrer automatiquement le bras (5) en ce qui concerne la direction transversale.
